# EUROPÄISCHE PATENTSCHRIFT

(11) **EP 1 479 958 B1**
(45) Veröffentlichungstag und Bekanntmachung des Hinweises auf die Patenterteilung: **21.12.2005**
(21) Anmeldenummer: 04009911.1
(22) Anmeldetag: 27.04.2004
(51) Int. Cl.: F16L 5/08, H02G 3/22

(54) **Vorrichtung zur Abdichtung von eingesetzten Leitungen und/oder Kabeln**
Sealing device for inserted conduits and/or cables
Dispositif d'étanchéité pour des conduits et/ou câbles inserés

(30) Priorität: 22.05.2003 DE 10323159
(43) Veröffentlichungstag der Anmeldung: 24.11.2004
(73) Patentinhaber: GK-System GmbH, 22926 Ahrensburg (DE)
(72) Erfinder: Opitz, Klaus B. E., 22149 Hamburg (DE)
(74) Vertreter: Hansmann, Dierk

(56) Entgegenhaltungen:
- EP-A- 0 948 110
- DE-A- 10 121 754
- US-A- 5 493 068

## Beschreibung

Die Erfindung bezieht sich auf eine Vorrichtung zur Abdichtung von eingesetzten Kabeln, Leitungen und/oder Rohren in Wand- und Deckendurchbrüchen, mit einer elektromagnetischen Abschirmung, bestehend aus einem ortsfesten Rahmen zwischen den Kabeln, Leitungen und/oder Rohren und dem ortsfesten Rahmen baukastenartig über- und/oder nebeneinanderliegenden, ganz oder teilweise elastischen Paßstücken und einer mittels Druckelementen und Keilelementen einstellbaren Klemmvorrichtung, durch die ein in der Rahmenebene wirkender Druck einstellbar ist, der die einzelnen Elemente dichtend in dem Rahmen hält.

Eine Vorrichtung mit einer einstellbaren Klemmeinrichtung ist beispielsweise aus der DE 196 02 760 C2 bekannt, wobei durch eine Abtrennung bestimmte wasser- und gasdichtende Funktionen und flammhemmenden Funktionen übernommen werden. Zur elektromagnetischen Abschirmung und für eine Ableitung von Störeinleitungen, hervorgerufen von elektrischen, magnetischen und/oder elektromagnetischen Feldern mit einem potentialfreien Erdkontakt über einen ortsfesten Rahmen ist auch gemäß der EP 0 590 410 B1 bekannt, wobei im wesentlichen entsprechende Metallkissen angeordnet sind, die zur Kontaktierung von Schirmgeflechten auf Kabel eingesetzt sind.

Die Herstellung einer durchgehenden Abschirmung bei derartigen Ausbildungen ist relativ aufwendig und erfordert für die Montage gesonderte Maßnahmen, die sehr sorgfältig durchzuführen sind.

Durch die einstellbare Klemmvorrichtung besteht aber der Mangel, daß die Abschirmung insbesondere in einem zentralen Bereich zwischen den Druck- und Spannelementen unterbrochen ist und somit keine Abschirmung besteht.

Nach der DE 37 11 937 C1 ist eine Vorrichtung zur elektromagnetischen Abschirmung für Kabel, Leitungen und Rohre bekannt geworden. Hierbei ist vorgesehen, die durchzuführenden Leitungen abzuisolieren und die so entstandenen Kontaktstellen mit Kontaktbandwicklungen zu umwickeln, bis dieser Bereich wieder die ursprüngliche Stärke aufweist. Die Kontaktbänder werden mit einem Grundrahmen verbunden. Gleichzeitig ist vorgesehen, daß die verwendeten Module eine schwammartige Füllung aus elektrischem und/oder magnetischem Material aufweisen. Diese Maßnahmen sind insgesamt sehr aufwendig und die einstellbare Klemmvorrichtung ist gegebenenfalls zusätzlich mit einer Abschirmung zu verbinden.

Auch nach der EP 0 948 110 A1 ist eine Umwicklung von abisolierten Bereichen mit leitenden Folien vorgesehen, die mit einem Rahmen verbindbar sind, indem der Rahmen durch Module aufgefüllt ist, die ebenfalls durch Folien beschichtet sind.

Dokument DE 10 121 754 offenbart eine Vorrichtung gemäß dem Oberbegriff des Anspruchs 1.

Die Aufgabe der Erfindung ist es, eine durchgehende Abschirmung über die gesamte Rahmenebene durch vorgefertigte einsatzfähige Bauelemente zu schaffen, die auch unter Berücksichtigung der entstehenden Größenveränderungen bei der Einstellung der Klemmvorrichtung besteht und eine einfache Montage gewährleistet.

Die Lösung dieser Aufgabe erfolgt erfindungsgemäß dadurch, daß die Paßstücke, die Druckelemente und Keilelemente der Klemmvorrichtung aus elektrisch nicht leitenden Materialien an ihren Oberflächen mittels einer VakuumBeschichtung aufgebrachte Beschichtungen aus elektrisch leitenden duktilen Materialien in Form von Metallen oder Metallegierungen, zur Bildung einer geschlossenen Abschirmung über die gesamte Rahmenebene für eine elektromagnetische Dichtigkeit aufweisen.

Hierdurch wird auf einfache weise eine durchgehende Abschirmung gewährleistet, die eine einfache Montage ohne gesonderte Maßnahmen ermöglicht.

Ferner wird vorgeschlagen, daß die Beschichtung aus einer Kupfer-Chrom-Nickel-Legierung besteht.

Alternativ ist vorgesehen, daß die Beschichtung aus Gold oder einer Goldlegierung besteht.

Eine weitere Alternative besteht darin, daß die Beschichtung aus Silber oder einer Silberlegierung besteht.

Weiterhin ist zur Anpassung an die verwendeten Werkstoffe der Bauelemente und der Beschichtungsverfahren vorgesehen, daß die Beschichtung aus einem Mehrschichtaufbau aus unterschiedlichen Metallen und/oder Metallegierungen besteht.

Zusätzlich wird vorgeschlagen, daß die Beschichtung aus einem Mehrschichtbau aus unterschiedlichen Materialien, wie Lacke sowie Metallen und/oder Metallegierungen besteht.

Gegebenenfalls ist es zweckmäßig, daß zur elektromagnetischen Abdichtung eines aufgenommenen Kabelmantels und zum Kontaktieren des Kabelschirmes Metalldrahtkissen in den Paßstücken zwischengeschaltet sind.

In der Zeichnung ist ein prinzipieller Aufbau einer Anordnung dargestellt. Es zeigen:

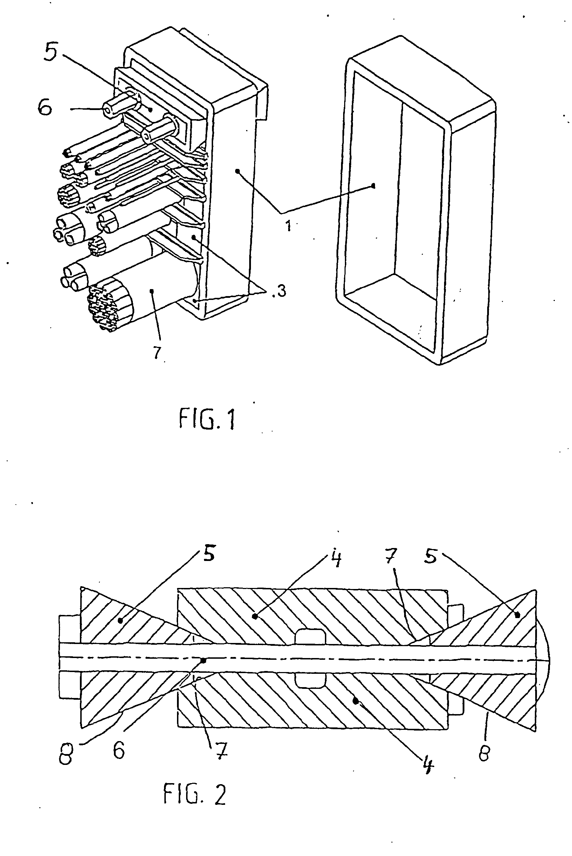

- Fig. 1: eine Gesamtdarstellung eines Rahmens mit eingesetzten Paßstücken und Klemmvorrichtung sowie abgedichteter Leitungen, Kabel und Rohren,
- Fig. 2: eine Schnittdarstellung von Druckelementen,
- Fig. 3, 4 und 5: Darstellungen eines Paßstückpaares/Paßstückes mit eingesetzten Metalldrahtkissen zur Verbindung mit dem Kabelschirm.

Bei der dargestellten Ausbildung sind in einem Rahmen 1 zwischen einer Durchführung Kabel, Leitungen bzw. Rohre in Öffnungen 2 von elastischen Paßstückpaaren 3 einsetzbar, wobei die Paßstücke 3 baukastenartig über- und nebeneinander den Rahmen 1 ausfüllen.

Oberhalb oder zwischen den Paßstückpaaren 3 sind zwei verstellbare Druckelemente 4 angeordnet, die durch zugeordnete beidseitige Keilelemente 5 über eine Schraube 6 als Spannelement gegeneinander verstellbar sind und damit in der Rahmenebene einen Druck auf die eingesetzten Paßstücke 3 ausüben. Hierzu besitzen die Druckelemente 4 korrespondierende Führungsflächen 7 zu den Keilflächen 8 der trapezförmig ausgebildeten Keilelemente 5.

Die im Rahmen 1 aus Metall eingesetzten Paßstücke 3, Druckelemente 4 und Keilelemente 5 sind aus einem Kunststoff gebildet, die durch das Spannelement 6 dichtend in dem Rahmen 1 verpreßt wurden.

Diese Elemente 3, 4 und 5 besitzen an ihren Oberflächen eine elektrisch leitende Beschichtung aus duktilen Metallen, so daß die einzelnen Teile elektrisch leitend miteinander verbunden sind und eine geschlossene elektromagnetische Abschirmung bilden.

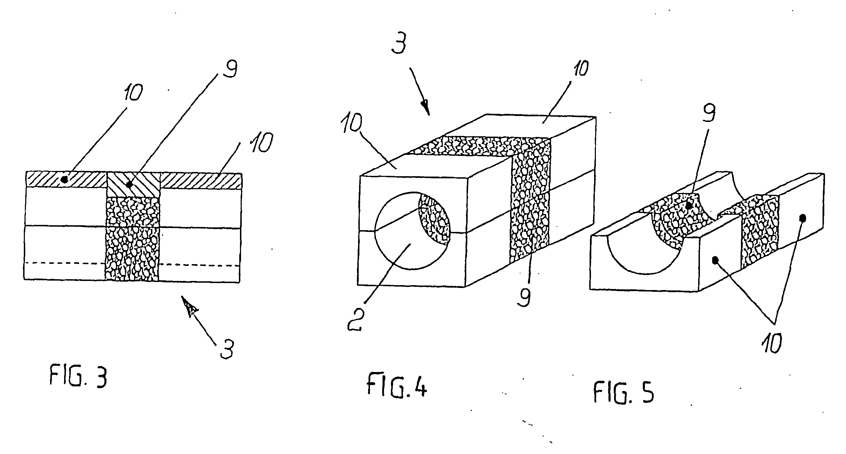

Gemäß Fig. 3, 4 und 5 sind in den Paßstücken 3 Metalldrahtkissen 9 zwischen zwei Kabelmodulen 10 angeordnet, um eine elektrisch leitende Verbindung mit dem Kabelschirm eines aufgenommenen Kabels herzustellen.

## Patentansprüche

1. Vorrichtung zur Abdichtung von eingesetzten Kabeln, Leitungen und/oder Rohren in Wand- und Deckendurchbrüchen, mit einer elektromagnetischen Abschirmung, bestehend aus einem ortsfesten Rahmen (1) zwischen den Kabeln, Leitungen und/oder Rohren und dem ortsfesten Rahmen (1) baukastenartig über- und/oder nebeneinanderliegenden, ganz oder teilweise elastischen Paßstücken (3) und einer mittels Druckelementen (4) und Keilelementen (5) einstellbaren Klemmvorrichtung, durch die ein in der Rahmenebene wirkender Druck einstellbar ist, der die einzelnen Elemente dichtend in dem Rahmen (1) hält, **dadurch gekennzeichnet, daß** die Paßstücke (3), die Druckelemente (4) und Keilelemente (5) der Klemmvorrichtung aus elektrisch nicht leitenden Materialien an ihren Oberflächen mittels einer VakuumBeschichtung aufgebrachte Beschichtungen aus elektrisch leitenden duktilen Materialien in Form von Metallen oder Metallegierungen, zur Bildung einer geschlossenen Abschirmung über die gesamte Rahmenebene für eine elektromagnetische Dichtigkeit aufweisen.

2. Vorrichtung nach Anspruch 1, **dadurch gekennzeichnet, daß** die Beschichtung aus einer Kupfer-Chrom-Nickel-Legierung besteht.

3. Vorrichtung nach Anspruch 1, **dadurch gekennzeichnet, daß** die Beschichtung aus Gold oder einer Goldlegierung besteht.

4. Vorrichtung nach Anspruch 1, **dadurch gekennzeichnet, daß** die Beschichtung aus Silber oder einer Silberlegierung besteht.

5. Vorrichtung nach einem der Ansprüche 1 bis 4, **dadurch gekennzeichnet, daß** die Beschichtung aus einem Mehrschichtaufbau aus unterschiedlichen Metallen und/oder Metallegierungen besteht.

6. Vorrichtung nach einem der Ansprüche 1 bis 5, **dadurch gekennzeichnet, daß** die Beschichtung aus einem Mehrschichtbau aus unterschiedlichen Materialien, wie Lacke sowie Metallen und/oder Metallegierungen besteht.

7. Vorrichtung nach einem der Ansprüche 1 bis 6, **dadurch gekennzeichnet, daß** zur elektromagnetischen Abdichtung eines aufgenommenen Kabelmantels (3) und zum Kontaktieren des Kabelschirmes Metalldrahtkissen in den Paßstücken zwischengeschaltet sind.

## Claims

1. Device for sealing cables, wires and/or pipes inserted in wall and ceiling orifices, with an electromagnetic screen, consisting of a stationary frame (1) between the cables, wires and/or pipes and wholly or partially elastic fitting pieces (3) disposed in a modular arrangement above and/or adjacent to one another with respect to the stationary frame (1), and a clamping device which can be adjusted by means of pressing elements (4) and wedge elements (5), by means of which a pressure acting in the frame plane can be adjusted and holds the individual elements sealed in the frame (1), **characterised in that** the fitting pieces (3), the pressing elements (4) and the wedge elements (5) of the clamping device, made from materials that are not electrically conductive, have coatings of electrically conductive ductile materials applied to their surfaces in the form of metals or metal alloys applied by a vacuum coating process forming a closed screen across the entire frame plane to provide an electromagnetic seal.

2. Device as claimed in claim 1, **characterised in that** the coating is made from a copper-chromium-nickel alloy.

3. Device as claimed in claim 1, **characterised in that** the coating is made from gold or a gold alloy.

4. Device as claimed in claim 1, **characterised in that** the coating is made from silver or a silver alloy.

5. Device as claimed in one of claims 1 to 4, **characterised in that** the coating is a multi-layered structure of different metals and/or metal alloys.

6. Device as claimed in one of claims 1 to 5, **characterised in that** the coating is a multi-layered structure of different materials, such as lacquers and metals and/or metal alloys.

7. Device as claimed in one of claims 1 to 6, **characterised in that** metal wire pads are inserted between the fitting pieces in order to provide an electromagnetic seal for a housed cable sheath (3) and to establish a contact with the cable screen.

## Revendications

1. Dispositif d'étanchéification de câbles, de conducteurs et/ou de tubes passés dans des traversées de paroi et des traversées de toit, lequel dispositif présente une protection électromagnétique, est constitué d'un bâti fixe (1), de pièces d'adaptation (3) totalement ou partiellement élastiques et agencées modulairement les unes au-dessus des autres et/ou les unes à côté des autres entre les câbles, les conducteurs et/ou les tubes et le bâti fixé (1) et un dispositif de serrage que l'on peut régler au moyen d'éléments de compression (4) et d'éléments de calage (5) et au moyen duquel on peut établir une compression qui agit dans le plan du bâti et qui maintient de manière étanche les différents éléments dans le bâti (1), **caractérisé en ce que**, pour former un blindage fermé dans tout le plan du bâti et ainsi d'obtenir une étanchéité électromagnétique, les pièces d'adaptation (3), les éléments de compression (4) et les éléments de calage (5) du dispositif de serrage en matériaux électriquement non conducteurs présentent sur leur surface des revêtements apportés sous vide et constitués de matériaux ductiles et électriquement conducteurs qui présentent la forme de métaux ou d'alliages de métaux.

2. Dispositif selon la revendication 1, **caractérisé en ce que** le revêtement est constitué d'un alliage de cuivre, de chrome et de nickel.

3. Dispositif selon la revendication 1, **caractérisé en ce que** le revêtement est constitué d'or ou d'un alliage d'or.

4. Dispositif selon la revendication 1, **caractérisé en ce que** le revêtement est constitué d'argent ou d'un alliage d'argent.

5. Dispositif selon l'une des revendications 1 à 4, **caractérisé en ce que** le revêtement est constitué d'une structure stratifiée de différents métaux et/ou alliages de métaux.

6. Dispositif selon l'une des revendications 1 à 5, **caractérisé en ce que** le revêtement est constitué d'une structure stratifiée de différents matériaux et par exemple de peintures et de métaux et/ou d'alliages de métaux.

7. Dispositif selon l'une des revendications 1 à 6, **caractérisé en ce que** l'on intercale des coussins de fils métalliques dans les pièces d'adaptation pour rendre électromagnétiquement étanche une enveloppe de câble (3) qui y a été insérée et pour assurer le contact avec le blindage de câble.
